(19)

**Europäisches Patentamt**
**European Patent Office**
**Office européen des brevets**

(11)  **EP 1 720 639 B1**

(12)  **EUROPEAN PATENT SPECIFICATION**

(45) Date of publication and mention
of the grant of the patent:
**26.12.2012 Bulletin 2012/52**

(51) Int Cl.:
**B01D 63/12** *(2006.01)*

(21) Application number: **05723898.2**

(22) Date of filing: **25.02.2005**

(86) International application number:
**PCT/US2005/006224**

(87) International publication number:
**WO 2005/082497 (09.09.2005 Gazette 2005/36)**

(54) **APPARATUS FOR TREATING SOLUTIONS OF HIGH OSMOTIC STRENGTH**

VORRICHTUNG ZUR BEHANDLUNG VON LÖSUNGEN MIT HOHER OSMOTISCHER STÄRKE

APPAREIL POUR LE TRAITEMENT DE SOLUTIONS DE FORCE OSMOTIQUE ELEVEE

(84) Designated Contracting States:
**AT BE BG CH CY CZ DE DK EE ES FI FR GB GR
HU IE IS IT LI LT LU MC NL PL PT RO SE SI SK TR**

(30) Priority: **25.02.2004 US 547500 P**

(43) Date of publication of application:
**15.11.2006 Bulletin 2006/46**

(60) Divisional application:
**11159806.6**

(73) Proprietor: **Dow Global Technologies LLC
Midland, MI 48674 (US)**

(72) Inventors:
• **MICKOLS, William, E.
Chanhassen, MN 55317 (US)**
• **MARSH, Allyn, R.
Lakeville, Minnesota 55044 (US)**
• **PEERY, Martin, H.
Bloomington, MN 55438 (US)**
• **BUSCH, Markus
67410 Drusenheim (FR)**
• **JONS, Steven, D.
Eden Prairie, MN 55343 (US)**

• **MCCLELLAN, Stuart
Palm Beach Gardens, FL 33410 (US)**

(74) Representative: **Casalonga, Axel
Casalonga & Partners
Bayerstrasse 73
80335 München (DE)**

(56) References cited:
**WO-A-03/039708     US-A- 4 046 685**

• **PATENT ABSTRACTS OF JAPAN vol. 2000, no.
12, 3 January 2001 (2001-01-03) & JP 2000 262867
A (TORAY IND INC), 26 September 2000
(2000-09-26)**
• **PATENT ABSTRACTS OF JAPAN vol. 2000, no.
13, 5 February 2001 (2001-02-05) & JP 2000 288356
A (TORAY IND INC), 17 October 2000 (2000-10-17)**
• **PATENT ABSTRACTS OF JAPAN vol. 2002, no.
03, 3 April 2002 (2002-04-03) & JP 2001 321641 A
(TORAY IND INC), 20 November 2001 (2001-11-20)**

<u>Remarks:</u>
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Field of the Invention

This invention is an apparatus and method for treating a solution of high osmotic strength, especially seawater, by passing the solution through a vessel containing spiral wound reverse osmosis or nanofiltration elements. Our invention allows for a more even distribution of flux within the vessel. Advantageous performance properties compared to conventional methods include higher vessel productivity, increased recovery, and lower requirement for applied pressure.

Background

Osmosis is the process whereby solvent passes through a semi-permeable membrane and moves from a solution of low solute concentration to one of high solute concentration, diluting the latter. In reverse osmosis (RO), pressure is applied to the high solute concentration side of the membrane and the chemical potential gradient that drives osmosis is reversed. The result is flow of solvent across the membrane, from high solute concentration to lower solute concentration, which produces a purified solvent solution. Reverse osmosis is now commonly used to create potable water from seawater.

Nanofiltration (NF) is similar to reverse osmosis in that pressure applied to the membrane overcomes an osmotic pressure difference and forces water through a membrane. Nanofiltration membranes are distinguished by the fact that some salts are substantially passed, while other salts are selectively retained. NF is most commonly applied to feed streams having low salt concentrations, but it has also been used to selectively remove components from seawater. For instance, US 6508936 describes use ofNF as a pretreatment that may advantageously remove hardness ions from seawater. US 4723603 describes use of NF as a means to reduce sulfate ions in seawater prior to downhole injection.

RO and NF membranes are typically configured in a series of spiral wound elements because such elements allow a large amount of membrane area to be packed into a small volume. The construction of spiral wound elements used in water purification has been described in the art. (see US Patent Nos. 5,538,642 and 5,681,467). Spiral wound elements and corresponding vessels are commercially available in a variety of standard diameters (e.g. 4.5, 6.3, 10, 15, 20 cm), but a one meter long element with a nominal 20 cm diameter is currently the standard for large systems. For seawater applications, each 20 cm diameter element typically contains between 26.5 $m^2$ (285 $ft^2$) and 35.3 $m^2$ (380 $ft^2$) of active membrane area.

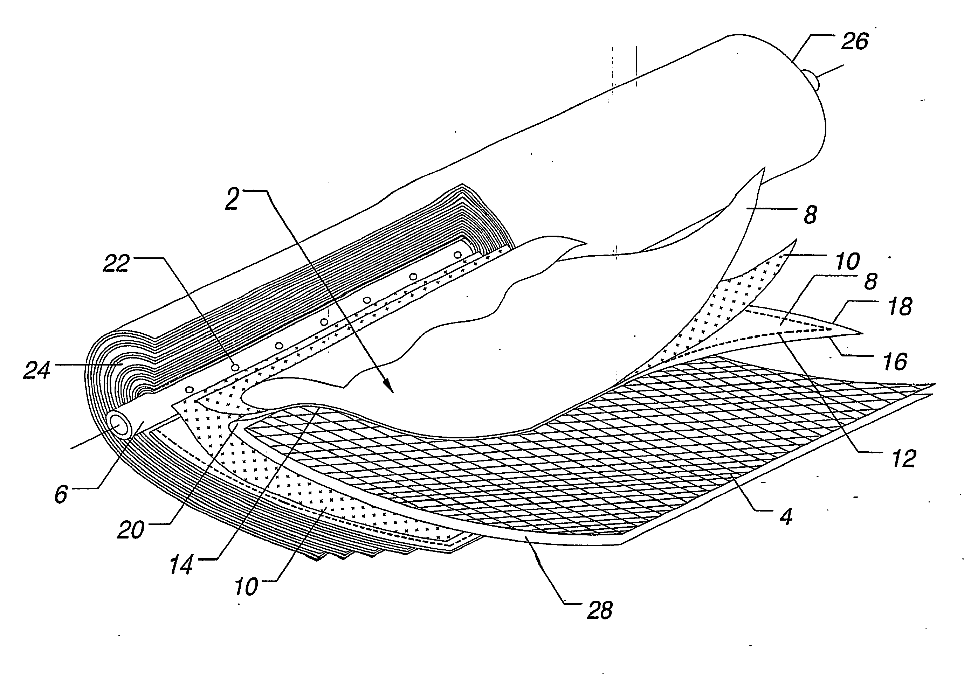

Fig. 1 represents a typical spiral wound element. One or more membrane envelopes (**2**) and feed spacer sheet (**4**) are attached at one end to a central permeate collection tube (**6**). The envelopes (**2**) comprise two generally rectangular membrane sheets (**8**) surrounding a permeate carrier sheet (**10**). This "sandwich" structure is held together along three edges (**14, 16, 18**), while the fourth edge (**20**) of the envelope (**2**) abuts the permeate collection tube (**6**) so that the permeate carrier sheet (**10**) is in fluid contact with openings (**22**) in the permeate collection tube (**6**). A feed spacer sheet (**4**) separates each envelope (**2**). The feed spacer sheet (**4**) is in fluid contact with both ends of the element (**24, 26**) and it acts as a conduit for feed solution across the front surface (**28**) of the membrane (**8**). The feed spacer sheets and envelopes are wound around the permeate collection tube so that the structure forms a cylindrical shape, and placed in a housing.

During operation, feed flows from one end of the housing to the other, over the membrane surface. As water flows through the film and into the permeate tube, the solute becomes more concentrated in the feed water, which may be referred to as concentrate or retentate; when the feed stream exits the pressure vessel, the output is referred to as the concentrate, or retentate.

In order for the spiral wound element to function for reverse osmosis, the feed stream must be under pressure. Therefore, spiral wound elements operate within a pressure vessel. Typically, a pressure vessel contains more than one element, connected in series. Such pressure vessels are known in the art and are exemplified by US Pat.No. 6,074,595 and US Pat. No. 6,165,303. Pressure vessels can be further combined in series or parallel with other pressure vessels to create membrane filtration system. In commercial RO application, a large filtration system may be composed of more than 10,000 elements, usually distributed in pressure vessels containing 4 to 8 elements each.

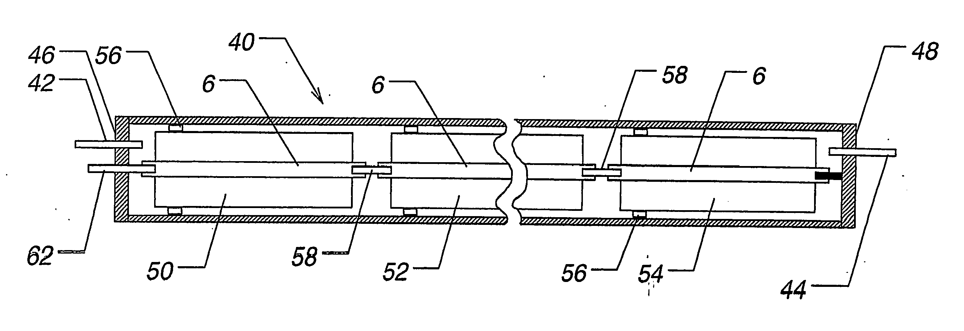

Referring to Fig. 3, a pressure vessel (**40**) has ports (**42, 44**) on opposite ends (**46, 48**) for passing feed solution into the vessel and removing the concentrate solution. Feed solution flows from the lead element (**50**) at the inlet end (**46**) of the vessel (**40**), across intermediate elements (**52**), to the tail element (**54**) at the opposite outlet end (**48**) of the vessel (**40**). Brine seals (**56**) between elements and the vessel may be used to prevent this feed flow from bypassing elements. Interconnectors (**58**) used to connect permeate tubes (**6**) of adjacent elements, and the combined permeate is removed from at least one permeate port (**62**) in the vessel (**40**). As an alternative to interconnectors, endcaps may be used on the elements that allow direct connection to adjacent elements; such endcaps are described in US Pat. No. 6,632,356.

Spiral wound element manufacturers provide filtration system designers with operating limits as guidelines for system design. Typically, an upper bound on applied pressure, a maximum feed flow rate, a minimum concentrate flow rate, and a maximum recovery (volume of permeate divided by volume of feed) for an element may all be specified. See, for example "Membranes System Design Guidelines for 8-inch FILMTEC™ Elements", Form No. 609-21010-702XQRP, FilmTec Corp.,'Edina, MN, 12/18/03. The manufacturer suggests operating limits for a FILMTEC™ SW30HR-380 seawater element include using open intake <69 bar (<1000 psi) applied pressure, <338 $m^3$/d (<62 gpm) feed flow, and >98 $m^3$/d (>18 gpm) concentrate flow rate. Other manufacturers have established similar guidelines, although a maximum element recovery often replaces feed and concentrate flow-specifications, and there has recently been a move to allow higher applied pressures in seawater systems.

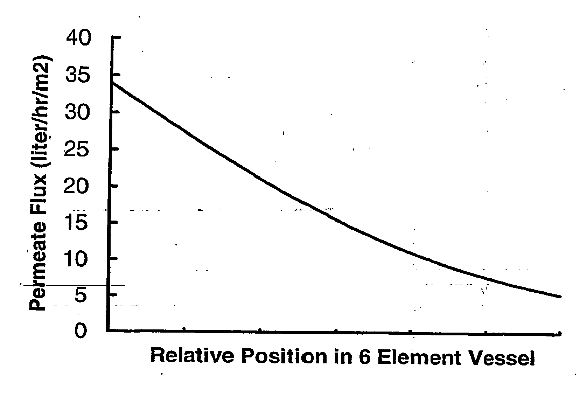

Typically, the elements in a given pressure vessel are selected from the same type, having the same specifications for flux, flow, recovery, and physical size. The pressurized feed flows axially through each of the elements, while the permeate tubes are connected to each other and sealed from the feed. The concentration of solute in the feed rises, and flux (permeate water volumetric flow rate per unit area of membrane) decreases, as feed flows through the successive elements. The decreased flux results in decreased utilization of membrane. The change in flux from the input to the output of the pressure vessel is also referred to as flux imbalance. Flux imbalance contributes to fouling and decreases overall water quality due to polarization in the upstream elements and low flux in the downstream elements. Figure 2 illustrates the decrease in spiral wound element flux within a typical pressure vessel as function increasing distance of an element position from the inlet of the pressure vessel. The flux decreases from the inlet end of the vessel to the outlet end as the rejected water concentrates and the feed osmotic pressure increases.

The decrease in flux in a pressure vessel is more pronounced in solutions with high osmotic pressure, such as seawater. In reverse osmosis, the flux through a membrane is essentially proportional to a net driving pressure. Net driving pressure is calculated by subtracting both the permeate pressure and the osmotic pressure difference across the membrane from the applied pressure. In the absence of polarization, the osmotic pressure difference across highly rejecting membranes is approximately equal to the osmotic pressure of the feed solution. For example, a solution with a typical salinity of 3.5% the osmotic pressure at the inlet port (before the lead element) would be about 26 bar (about 380 psi). After this typical solution passes through a spiral wound element with 40% recovery, the concentrate would then have about 5.8% salinity and the osmotic pressure at the outlet (after the last element) would be about 44 bar (about 630 psi). The increase in osmotic pressure for the feeds to successive elements dramatically decreases net driving pressure and flux for downstream elements. This problem is further aggravated by hydraulic resistance to feed flow within each element, resulting in a pressure drop down the vessel. Both increased osmotic pressure and pressure drop contribute to flux imbalance; for high osmotic strengths solutions like seawater, osmotic strength is especially important.

If filtration system designers select spiral wound modules to maximize the flux in the last element in a pressure vessel, the upstream units may have a higher flux than recommended by the manufacturer. Higher initial flux can substantially shorten the life of a spiral wound element due to fouling and scaling. High flux also promotes concentration polarization, decreasing the effective rejection of the membrane. However, lower flux in downstream elements is also undesirable, because of decreased productivity; lower flux means higher solute concentration in the permeate, and therefore lower recoveries.

Element manufacturers provide operating guidelines for spiral wound elements to use in designing filtration systems. Typically, guidelines include an upper bound on applied pressure, a maximum feed flow rate, a minimum concentrate flow rate, a maximum recover (volume of permeate divided by volume of feed), and maximum flux. The elements in Table 2, below, all have flows of about 23 $m^3$/day (6000-gpd) during a typical seawater test. This is consistent with the common range of 55-69 bar (800-1000 psi) for seawater operation.-For typical osmotic strengths, a 23 $m^3$/day seawater element with 32.5 $m^2$ (350 $ft^2$) of active area can be guaranteed to operate at 55 bar (800 psi) with less than 34 $L/m^2$/hr (20 gfd), an often quoted upper bound for flux. Fouling over time and differences in temperature and osmotic strength may potentially allow the same element to stay within these limits at even 68.9 bar (1000 psi) or for some conditions even 82.7 bar (1200 psi).

The relationship between flux and fouling has been studied, and flux guidelines are frequently based on the fouling potential of different waters. A common term for characterizing fouling potential is a Silt Density Index (SDI), used to establish limits for flux in seawater applications. A manufacturer typically either specifies a maximum flux for a particular type of element, or may specify an average flux over a water purification system where that element is used.

In addition to reducing production of permeate, flux imbalance contributes to fouling and decreases overall water quality due to polarization in the upstream elements and low flux in the downstream elements. Typically, designers solve this problem by the use of elements with low flux for high osmotic strength applications. By using elements with low flux, high pressure can be applied to the first element in series while flux from that element is kept below the maximum flux recommended by the manufacturer. The relatively high applied pressure allows the change in osmotic pressure from the lead end of the vessel to the tail end to be maintained at a relatively small fraction of the initial net driving pressure.

Another means to address the problems of flux imbalance has been to limit the recovery of seawater systems. Conventional seawater systems operate with a recovery of around 40-45%, so that flux limitations are not exceeded. If higher recovery were available less water would undergo pretreatment, lowering both operating and capital expense. Higher recoveries per vessel can reduce costs for the RO portion of a system by reducing both the number of pressure vessels required and related support costs (e.g. piping, electrical, elements and vessels). Also, increased recovery would mean less water must be raised to high pressure, and this minimizes economic loss from natural inefficiencies in energy recovery during operation. Finally, higher recoveries may reduce the volume of plant discharge. The recoveries which can be obtained in a vessel, and the associated benefits, have conventionally been limited by the threats of fouling at the lead end and low flow (for both permeate and concentrate) at the tail end.

Increasing the number of elements within a vessel provides one means to maximize the recovery for that vessel while preventing overfluxing of the first element. However, an increased number of elements generally results in the last elements in a vessel operating at very low flux; the resulting permeate quality is lower because less water passes through these last elements. Increasing the number of elements increases the length of the pressure vessel, and is therefore more suitable for new facilities than existing facilities with pressure vessels already in place. Additionally, the cost for such systems is increased due to a larger number of elements and the need for longer vessels.

Another method to alleviate the impact of flux imbalance on system performance takes advantage of the variability of flow rates within a spiral wound element type. Designers or manufacturers test element flow rates, sort or label elements according to flow, and providing a loading plan that specifies the position of specific individual elements (for instance, by serial number) within each vessel. One disadvantage to this approach is the labor required to test and sort elements, and the need for a loading plan for each vessel. The other disadvantage is that only one type of element is typically used throughout a given project, and the range of flow rates is limited to the variability between individual elements.

Other methods have been described for improving seawater economics while controlling flux of elements. US Pat. No. 6,187,200 describes systems comprising multiple stages with backpressure on the first stage or an inter-stage boost between stages. However, this method requires additional cost in pumps, plumbing, and extra pressure vessels. Further, these two-stage systems are often designed to operate with at least one stage at very high pressures, and this makes equipment more expensive US Pat. No. 6,277,282. Alternatively, improved pre-treatment of seawater can be used to allow for higher average flux guidelines and greater tolerance for flux imbalance. This also requires additional capital expense (this time for pretreatment), and the impact pretreatment will have on fouling is difficult to quantify a priori. Finally, very efficient energy recovery devices have been used to make substantially lower recoveries more economically competitive. Lower recoveries limit flux imbalance within a seawater system. However, this method involves additional equipment for energy recovery and potentially increased costs due to a greater volume of pretreated water.

In addition to addressing flux imbalance, another improvement for treating solutions with high osmotic strength has been to reduce concentration polarization across the spiral wound element by varying the feed spacers. A feed spacer in a spiral wound elements provides a path for feed flow across the surface of a membrane. It also creates mixing at the membrane surface that decreases concentration polarization, enhancing mass transfer across the membrane. The cost of this enhanced mass transfer is increased pressure drop down the length a spiral wound element; the sum of pressure drops for individual elements in series produces a pressure drop down the vessel. A recent example of a feed spacer is described in US Patent App. Pub. 2003-0205520.

Reverse osmosis accounts for about 40 percent of the current global production of desalinated seawater. The economics of reverse osmosis desalination, including the large facilities required may limit the growth of this technology. Improved efficiency of pressure vessels would reduce the number of pressure vessels required, and therefore reduce capital costs for equipment. Additionally, pressure vessels that would operate at lower applied pressure, with the same throughput of water, would reduce operating costs. An improved pressure vessel for water filtration systems that operates with more uniform flux distribution, higher average operating flux, and higher recovery would also operate with improved efficiency and lower applied pressure to improve the economics of reverse osmosis for seawater desalination.

Summary of Invention

This invention improves pressure vessels in membrane filtration systems for treating solutions of high osmotic strength with an apparatus according to claim 1, and is useful for seawater desalination systems. A given pressure vessel in the membrane filtration system contains at least three spiral wound elements with substantially differing standard specific fluxes, as described in more detail below, and, optionally, selected feed spacer standard pressure gradients. The arrangement of the spiral wound elements within a pressure vessel allows for more uniform flux distribution, higher average operating flux, and higher recovery than the use of elements of similar standard specific flux or similar feed spacers. The standard specific fluxes between elements differ by a factor of at least 1.5 and preferably 2.0.

Combining elements having widely differing standard specific fluxes within a vessel allows operating within manufacturers' guidelines with higher recoveries or lower energies, as compared to conventional systems. In a preferred embodiment a pressure vessel for use in desalination of seawater has downstream element (preferably the tail element) has a standard specific flux that is at least 1.5 L/m$^2$/hr/bar. It is also desirable that an upstream element (preferably the lead element) has a standard specific flux less than 1.0 L/m$^2$/hr/bar.

The elements in the vessel may also have differing feed spacer, with such designated by different standard pressure gradients. Preferably, the standard pressure gradient for the feed spacer of the last element is at least 50% greater than that of the first element.

In addition, this invention may include a means for removing the permeate stream of one or more upstream spiral wound elements in the pressure vessel independently from downstream elements in the same vessel.

This invention may further include a membrane filtration system having two or more pressure vessels connected in parallel. The parallel pressure vessels each have three or more elements with substantially differing standard specific fluxes and optionally, feed spacer pressure gradients. In addition, elements at corresponding positions within the parallel pressure vessels have similar standard specific fluxes and, optionally, feed spacer standard pressure gradients.

Brief Description of Drawings

This invention and its preferred embodiments may be better understood through reference to the detailed description of the invention, accompanied by figures described below. Within these sections, like reference numerals refer to like elements.

FIG. 1 is a perspective, partially cutaway view of a spiral wound element. The element is formed by alternately wrapping filtration envelopes and feed spacer sheets about a central permeate collection tube. The filtration envelop comprises a permeate carrier sheet sandwiched between two sheets of membrane.

FIG. 2 is a graph showing how permeate flux may substantially decrease from the lead end to the tail end of the vessel. The figure presents calculated flux for a six element vessel corresponding to operating conditions detailed in Comparative Example III.

FIG. 3 is a schematic that shows a typical configuration for a vessel containing at least three elements in series.

FIG. 4 is a schematic that shows another typical configuration for a vessel containing at least three elements in series. In this figure, a barrier to permeate flow exists within the permeate tube of one element and permeate solution is removed from both ends of the vessel.

Detailed description of the Invention

This is a pressure vessel for use in a filtration system where the vessel has at least three spiral wound elements of different types, characterized by different standard specific fluxes and, optionally, different feed spacer sheets in the modules.

Specific flux is frequently used to for a membrane is commonly understood as the flux (permeate volumetric flow rate per unit area of active membrane) divided by the net driving pressure. The net driving pressure, as discussed above, is calculated by subtracting the permeate pressure and the osmotic pressure difference across the membrane from the applied pressure. While specific flux is a characteristic of the membrane, it varies predictably as a function of temperature, concentration, and applied pressure. Additionally, the specific flux of a membrane in any element operating in the field is subject to changes due to aging, fouling, and compaction.

Assigning a standard value to a spiral-wound element requires specifying a specific point in time within the useful life of a spiral wound element. For the purpose of this invention, we are defining a standard specific flux for a spiral wound element is defined in terms of a test performed after 24 hours of initial operation, to allow for membrane equilibration, although subsequent changes to results of this test should be relatively small in the absence of substantial fouling. The standard specific flux for a spiral wound element is determined using a test with 32000 ppm NaCl in the feed, 8% recovery, 25°C, and an average flux of 27 L/m$^2$/hr (16 gfd). More specifically, the standard specific flux for a spiral wound element is defined as the average flux (27 L/m$^2$/hr) divided by a pressure term P, where P is calculated from quantities measurable during the test:

$$P = ( P_{feed} + P_{conc} )/2 - P_{perm} - (\pi_{FeedAvg} - \pi_{perm})$$

$P_{feed}$ is the applied pressure on the inlet side of the element. $P_{conc}$ is the applied pressure on opposite end (concentrate side) of the element, and $P_{conc}$ is typically smaller than $P_{feed}$ due to resistance to flow within the feed spacer. $P_{permeate}$ is the applied pressure at the point where permeate exits a spiral wound element, and this backpressure during the test is typically very small. $\pi_{FeedAvg}$ is the osmotic pressure of a solution formed by mixing equal volumes of the feed solution entering the element and concentrate solution leaving the element. $\pi_{Perm}$ is the osmotic pressure of the permeate solution. Note that P approximates the average net driving pressure for a spiral wound element. (To calculate the average net driving pressure, $\pi_{FeedAvg}$ would be replaced by the average osmotic pressure at the surface of the membrane.)

This definition for standard specific flux does not include the impact of polarization on osmotic pressure, so that the term P slightly over-estimates the net driving pressure, but it is simpler to calculate.

This definition of a spiral wound element's standard specific flux is consistent with accepted industry practices while specifying a unique and easily determined parameter. The 24 hour time period for equilibration is common for specifying element performance. The test conditions (8% recovery, 25°C, and 32000 ppm NaCl) are consistent with tests used to characterize seawater products, without exceeding typical maximum flux guidelines for elements with high standard specific flux.

Very high fluxes cause excessive polarization and substantial internal resistances to flow, such as within the permeate carrier sheet. These effects cause overestimation of the applied pressure required under more typical flux conditions (12-17 L/m$^2$/hr). For this invention, a spiral wound element's standard specific flux is defined in terms of a test that stipulates an average flux of 27 L/m$^2$/hr during the measurement process. The standard specific flux can be estimated from the results (average flux and term $P$) of a typical seawater test, as long as the flux of a spiral wound element does not exceed 34 L/m$^2$/hr (20 gfd).

As an example, for a spiral wound element with good rejection and with minimal pressure drop down the feed spacer, the term P above corresponds to approximately 27.6 bar (400 psi) in a typical 55.2 bar (800 psi) seawater test. A 32.5 m$^2$ (350 ft$^2$) element with 21.2 m$^3$/day (5600 gpd) would have a flux of 27 L/m$^2$/hr (16 gfd) and correspond to a standard specific flux of approximately 1.0 L/m$^2$/hr/bar (0.04 gfd/psi).

In this invention, it is required that at least three individual elements within a vessel have substantially different values of standard specific flux, but it is even more desirable that at least two, and preferably three, elements within a vessel belong to different recognized classes (or types), such that the standard specific flux of these different element types vary substantially. Elements of the same type are similarly constructed and are supplied by the manufacturer with a separate designation corresponding to the group of elements of that type.

A standard specific flux for a spiral wound element type may be defined as the mean value of standard specific flux for a representative population of individual elements (at least 20) belonging to that type (or class or model). In this invention, it is required that at least three individual elements within a vessel have substantially different values of standard specific flux; it is even more desirable that these three, elements within a vessel belong to different recognized classes (or types), such that the standard specific flux of these different element types vary substantially.

Elements of the same type have similar construction and are supplied by the manufacturer, who frequently identifies the type by brand or product name or number designating the group of elements of that type.

The inventors have discovered that the use of more than one type of element within a vessel permits a selection of elements with a wider range of standard specific fluxes, and results in substantial improvement in the performance of a pressure vessel. As used in this invention, a spiral wound element type may be characterized by a unique population of elements with a distribution of standard specific flux values having a mean and a coefficient of variation ratio, that is population standard deviation divided by population mean, less than or equal to 1.1. It is preferable that individual elements used in this invention have a standard specific flux that deviates from the mean standard specific flux for the corresponding element type by less than 20%. Even more preferable is that this deviation is less than 15%.

The inventors have also determine that specifying the type of element at each position within a vessel also allows for a substantially simplified loading process for large systems with several parallel vessels, especially compared to systems that rely on testing and sorting elements within a particular type. The inventors have discovered that there is less variation between vessels for the standard specific flux of elements at any one position in a vessel.

As an example, Table 1 shows standard specific flux values calculated for four types of FilmTec seawater elements from the manufacturer's specified flow, area, and test conditions.

Table 1. Standard specific flux of FilmTec seawater elements

| FILMTEC™ Element | Flow m$^3$/d (gpd) | Reject (%) | Area m$^2$ (ft2) | Standard Specific Flux 1/m$^2$/hr/bar (gfd/psi) | |
|---|---|---|---|---|---|
| SW30HR-380 | 22.7 (6000) | 99.7 | 35.3 (380) | 0.097 | (0.039) |
| SW30HR-320 | 22.7 (6000) | 99.75 | 29.7 (320) | 1.15 | (0.047) |
| SW30HR LE-380 | 28.4 (7500) | 99.75 | 35.3 (380) | 1.22 | (0.049) |
| SW30-380 | 34.0 (9000) | 99.4 | 35.3 (380) | 1.46 | (0.059) |

Table 2 lists manufacturers' literature values for flow and salt passage for several one-meter long, 20 cm diameter commercial seawater elements. It is noteworthy that the flows associated with commercial seawater offerings are fairly consistent between manufacturers. Using an active membrane area of 32.5 m$^2$ (350 ft$^2$), the standard specific flux for elements in Table 2 would all fall between 0.74 L/m$^2$/hr/bar (0.03 gfd/psi) and 1.23 L/m$^2$/hr/bar (0.05 gfd/psi).

The data from a Hydranautics publication can be used to calculate that seawater elements have had a standard specific flux of about 1.0 $L/m^2/hr/bar$ (0.04 gfd/psi) since commercial introduction of aromatic polyamide membranes in the mid 80's (M. Wilf & K. Klinko, "Improving performance and economics of RO seawater desalting using capillary membrane pretreatment", Hydranautics, Inc., June 1998). The 1.0 $L/m^2/hr/bar$ (0.04 gfd/psi) value prevents substantially over-fluxing the lead element because elements for seawater desalination are commonly operated with between about 55 bar (800 psi) and 69 bar (1000 psi) applied pressure, with an osmotic strength of the feed usually between 24 bar (350 psi) and 31 bar (450 psi).

Table 2. Flow and rejection of some commercial seawater elements

| Manufacturer | Element | Flow $m^3/d$ (gpd) | Reject (%) |
|---|---|---|---|
| TORAY Industries, Inc | TM820-370 | 23.0 (6076) | 99.75 |
| TORAY Industries, Inc | TM820-400 | 25.0 (6604) | 99.75 |
| TORAY Industries, Inc | SU-820 | 16.0 (4227) | 99.8 |
| TORAY Industries, Inc | SU-820L | 20.0 (5283) | 99.7 |
| TORAY Industries, Inc | SU-820FA | 19.0 (5019) | 99.75 |
| TORAY Industries, Inc | TM820H-370 | 21.0 (5548) | 99.8 |
| Hydranautics | SWC1 | 18.9 (5000) | 99.6 |
| Hydranautics | SWC3 | 22.3 (5900) | 99.7 |
| Hydranautics | SWC3+ | 26.5 (7000) | 99.8 |
| Hydranautics | SWC4 | 20.8 (5500) | 99.8 |
| Hydranautics | SWC4+ | 24.6 (6500) | 99.8 |
| Koch Membrane Systems, Inc. | TFC®2822 SS-300 | 18.9 (5000) | 99.6 |
| Koch Membrane Systems, Inc. | TFC®2822 SS-360 | 22.7 (6000) | 99.6 |
| Koch Membrane Systems, Inc | TFC®2822 SS-300 Premium | 17.0 (4500) | 99.75 |
| Koch Membrane Systems, Inc. | TFC®2822 SS-360 Premium | 20.8 (5500) | 99.75 |
| TriSep Corporation | 8040-ACMS-SSA | 22.7 (6000) | 99.5 |

Membranes having 1.0 $L/m^2/hr/bar$ (0.04 gfd/psi) typically are used for seawater applications to accommodate the imbalance in flux that results within a vessel of multiple elements. Operating pressure vessels with spiral wound elements having a high standard specific flux are in feed solutions with high osmotic strength, such as seawater creates typically creates greater flux imbalance. A high flux on a lead element results in higher solute concentration in the concentrate, which feeds subsequent elements in the vessel. The increased osmotic strength of the feed causes subsequent elements in the vessel to operate at substantially lower flux. This is demonstrated in the Comparative Examples 3 and 4, below. A vessel of elements having standard specific flux of 0.98 $L/m^2/hr/bar$ (0.04 gfd/psi) showed extremes of operating fluxes ranging between 5 $L/m^2/hr$ and 34 $L/m^2/hr$. However, in a similar simulation with elements of standard specific flux 1.19 $L/m^2/hr/bar$ (0.07 gfd/psi), an even lower flux of 3.3 $L/m^2/hr/bar$ (1.9 gfd) results near the outlet end and a much too high flux of 44 $L/m^2/hr$ (26 gfd) results near the inlet end of the vessel.

This invention will allow for acceptable use of standard size seawater elements with even higher flows. The invention necessitates that there be more than one type of element within a vessel. In particular, the standard specific flux for a downstream element in the vessel is at least 50% greater, and more preferably at least 100% greater, than the standard specific flux for an upstream element in the same vessel. It is most preferred that this downstream element have a standard specific flux greater than 1.5 $L/m^2/hr/bar$ (0.061 gfd/psi).

It is desirable that elements having high standard specific flux also maintain a relatively low solute permeability coefficient. A solute permeability coefficient, often referred to as a B-value, determines the rate at which salt diffuses through a membrane. (See, for example Osada & Nakagawa, Membrane Science and Technology, Chapter 9, "Reverse Osmosis," Marcel Dekker, Inc., New York, 1992). The solute permeability coefficient is one of the fundamental parameters of an osmotic membrane but its value is known to vary with solute composition and particularly with temperature. For a specific set of operating conditions, the solute permeability coefficient of a membrane $B_{mem}$ may be calculated from flux J and the intrinsic solute passage $C_p/C_m$, according to the following formula:

$$B_{mem} = ( J * C_p/C_m ) / ( 1 - C_p/C_m )$$

In this equation, $C_p$ and $C_m$ represent the concentrations of solute in the permeate and at the membrane's surface on the feed side, respectively. The concentration at the membrane's surface may be greater than the concentration in the feed due to concentration polarization.

For this invention, a standard solute permeability for a spiral wound element is defined similarly, but with the additional requirement that parameters are obtained under the test conditions specified for the standard specific flux. Specifically, measurements are made after 24 hours of operation using 25°C, 32000 ppm NaCl in the feed, 8% recovery, and a flux of 27 L/m²/hr. Additionally, the standard solute permeability $B_{ele}$ is defined in terms of an average feed concentration, $C_f$, corresponding to the concentration of NaCl obtained by mixing equal volumes of the feed solution entering the element and concentrate solution leaving the element. While the simplified formula does not account for the impact of concentration polarization, it does allow for simpler measurement of required parameters.

$$B_{ele} = ( J * C_p/C_f ) / ( 1 - C_p/C_f )$$

In this invention, the standard solute permeability is used to compare different elements by ratio. While the standard solute permeability of a spiral wound element is defined based on specific test conditions, it is possible to approximate this ratio for two elements, provided that temperature, concentrations, and recovery are similar for the two tests and provided that measured flux in the tests are less than 34 L/m2/hr (20 gfd).

The last element in series within a vessel operates with higher salt concentrations in the feed than other elements, so poor rejection can strongly influence system performance and it is important that salt rejection of the tail element be high. It is preferable that the tail element has at least sufficiently good salt rejection to produce potable water (< 500 ppm) when operating on its own during a standard test with 25°C, 32000 ppm NaCl in the feed, 8% recovery, and a flux of 27 L/m²/hr. More preferably, the rejection should be of bottled water quality (< 300 ppm) in this test In the case of NF applications, substantial passage of NaCl (greater than 20% passage of NaCl with the above test conditions) is desirable for all elements within the vessel, but it is also desired that elements have high rejection of another component. For seawater NF applications using elements of different standard specific flux within a vessel, it is preferable that the passage of sulfate be less than 1% for any element in the vessel when elements are tested individually on a feed consisting of 32000 ppm NaCl and 2000 ppm $MgSO_4$, using conditions of 25°C, 8% recovery, and 27 L/m²/hr flux.

An additional aspect of this invention is to have spiral wound elements within a pressure vessel have different feed spacers. Feed spacers are described in several patents and applications including US Patent Application Publication 2003-0205520, which we incorporate here by reference. The feed spacer of a spiral wound element provides a path for feed flow across the membrane surface. It also creates mixing at the membrane surface that decreases concentration polarization. The cost of this enhanced mass transfer is increased pressure drop down the length the element, and the sum of pressure drops for individual elements in series produces a pressure drop down the vessel.

Mixing at the membrane surface is particularly important in the case of high osmotic strength solutions. We have discovered that selecting feed spacers so that mixing is greater for downstream elements, and particularly the last element in series, where osmotic strength is greatest and pressure drop has the least impact on vessel performance, improves vessel performance. It is within the scope of this invention that the lead element and tail element in the vessel may use different feed spacer materials and it is most preferred that the standard pressure gradient for the feed spacer of the last element be at least 50% greater than the standard pressure gradient for feed spacer of the first element.

The standard pressure gradient for a feed spacer is defined for this invention to be the pressure gradient (pressure drop per unit of distance) in the direction of feed flow measured by passing 25°C water through the element while permeate flow is blocked. This test specifies the volumetric flow rate of water as proportional to the active membrane area within the element; the volumetric flow is and to be inversely proportional to the length of the element. For example, in a one meter long, 35.3 m² (380 ft²) element, the flow rate used to measure the standard pressure gradient is 190 m³/day. It is most preferable that the standard pressure gradient be at least 0.4 bar/m, corresponding to about a 6 psi pressure drop across a meter long element.

High recoveries allowed by our invention can typically reduce the volume of feed solution flowing across the membrane's surface. Such decreased feed velocity increases polarization, decreases flux, and promotes fouling; it may result in operating outside a spiral wound element manufacturer's specifications for maximum recovery. For these reasons elements may be staged within a vessel so that the velocity of feed flow across the membrane surface is maintained at a relatively high rate. The feed flow velocity can be controlled by varying the cross-sectional area of the feed spacers in each element in the pressure vessel. The feed spacer cross sectional area is calculated by multiplying the thickness of the feed spacer by half the active membrane area and dividing by the length of the element.

In a preferred embodiment, a downstream element in the vessel may have a feed spacer cross sectional area that is at least 15% smaller than that for the lead element, and more preferably 30% smaller. When the element operates according to a <15% recovery guideline, the velocity of feed across the last element in series is greater than the velocity within the previous one or two elements in series. Additionally, when such a spiral wound element has an outer diameter that is substantially smaller than the inner diameter of a vessel, brine seals between the outer surface of the element and the inner surface of the pressure vessels prevent the feed stream from bypassing the element.

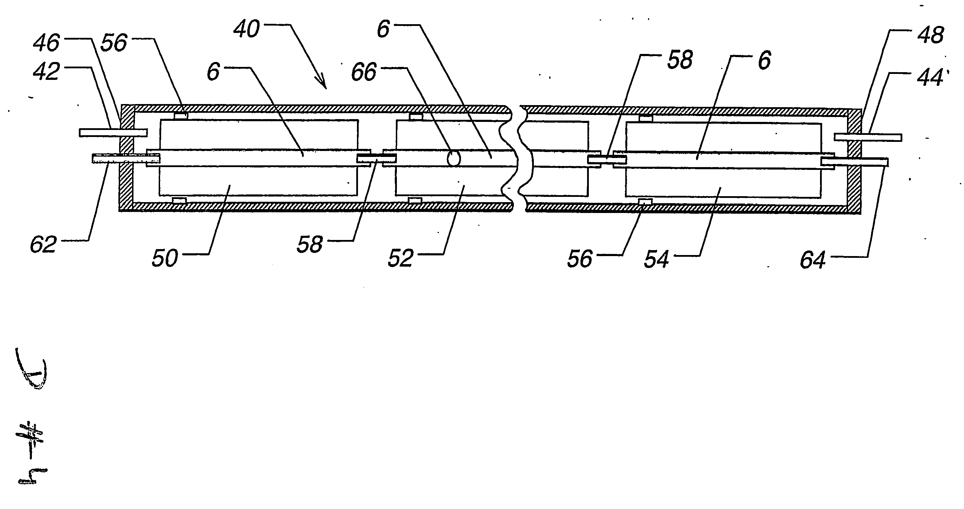

In another aspect of our invention, the permeate from at least one stream element is removed from the pressure vessel, rather than flowing through the adjacent pressure vessel. This maintains the driving pressure at of the adjacent element by keeping the permeate pressure low. The permeate can be removed from the pressure vessel through either a new exit port or through the permeate channel at the lead end of the pressure vessel. US 4046685 teaches removing permeate flow from both the lead and tail ends of the vessel and segregating the permeate generated in elements at opposite ends. As illustrated in Fig 4, in this case the vessel (**40**) has permeate ports (**62, 64**) on both its ends to provide means for fluid to pass between external piping and the permeate tubes (**6**) of end elements (**50**, **54**). A barrier (**66**) to permeate flow segregates the two permeate streams that leave from elements at opposite ends of the vessel. The barrier (**66**) is located between elements or within the permeate tube (**6**) of one element, and it prevents the two permeate streams from substantial mixing. It is not required that the barrier to flow be impenetrable to prevent substantial mixing. However, where permeate interconnectors are used, the barrier should have a resistance to flow that exceeds by at least a factor of five the resistance to flow of permeate interconnectors (**58**) used within the vessel (**40**) to connect the permeate tubes of adjacent elements. In the conventional design, this segregation of permeate streams allows the best quality permeate to be removed from the upstream elements in a vessel (**40**). At the same time, using downstream elements of higher standard specific flux can, allow for a high flow of permeate from the tail end (**48**) of the vessel (**40**) having good permeate quality. Depending on operating conditions, water from downstream elements may be suitable for industrial, potable, or bottled water. It is also possible to subject this permeate stream to additional treatment steps or to use it in blending.

When the barrier to permeate flow is essentially impenetrable, the two permeate streams may also be maintained at different pressures. In this case, use of permeate back pressure can provide a relatively even flux distribution, independent of whether elements of higher standard specific flux are located near the upstream end or downstream end of the vessel. In a preferred embodiment, permeate back pressure results when the combined permeate stream from high standard specific flux elements becomes the feed stream for a second pass filtration vessel. Most preferably, elements of higher standard specific flux would be located near the inlet end of the first vessel, as this arrangement provides a larger net driving pressure to cause permeate flow in both first and second pass elements.

A particular advantage of our invention is its usefulness in upgrading existing systems to improve recovery with minimal capital expense. The cost of commercial spiral-wound elements is small compared to the cost of the seawater filtration system. This invention allows pressure vessel efficiency to be increased by removing one or more existing elements from the vessel and loading new elements, at least one of which has a standard specific flux greater than 1.5 $L/m^2/hr/bar$ (0.061 gfd/psi). Selectively replacing elements to provide a more even flux distribution allows operating a vessel at higher average flux and greater recovery without exceeding the maximum flux of any one element in the pressure vessel. This is evidenced as a particularly advantageous option when one recognizes that elements typically represent only 5% of the capital cost in seawater installations. Alternatively, a vessel may be upgraded to obtain the same recovery while operating with a decreased maximum average element flux.

Examples

The following examples of embodiments, which we do not intend to limit the invention, illustrate our invention further:

Comparative Example 1

Four elements were made with 2.6 $m^2$ of active membrane that had the specifications of that used in FILMTEC SW30HR-380 elements. The elements had an average standard specific flux of 0.98 $L/m^2/hr/bar$ (0.04 gfd/psi) and an average standard solute permeability of 0.066 $L/m^2/hr$ (0.039 gfd). The elements were connected in series within a pressure vessel. The vessel was tested with a 3.2% NaCl feed at 21°C, and an applied pressure of 55 bar (798 psi). The combined recovery from the pressure vessel was 19.6%. The combined permeate concentration was 245 ppm.

We calculated the standard specific flux of the first element to be about 27 $L/m^2/hr$. The average flux of first three elements was 22.6 $L/m^2/hr$ (13.3 gfd); the average flux of the forth element in series was 15.6 $L/m^2/hr$ (9.2 gfd). The fourth element operated at less than 20% recovery, with a flux of about 60% of the first element flux.

Example 1

A membrane element was constructed using FILMTEC SW30HR membrane. Four elements having 2.6 m$^2$ of active membrane area were constructed, using FILMTEC SW30SXLE membrane. Three of the SW30SXLE membrane elements were treated by immersing the membrane in an aqueous solution of 2000 ppm NaOCl for 30 minutes at pH was 10.5. Table 3 shows the measured standard specific flux and standard solute permeability for these elements.

Table 3. Elements described in Example 1

| Element | Membrane | Standard Specific Flux | | Standard Solute Permeability | |
|---|---|---|---|---|---|
| | | L/m$^2$/hr/bar | (gfd/psi) | L/m$^2$/hr | (gfd) |
| A | SW30HR | 1.07 | (0.043) | 0.29 | (0.17) |
| B | SW30XLE | 1.43 | (0.058) | 0.45 | (0.26) |
| C | SW30XLE (treated) | 2.12 | (0.086) | 0.33 | (0.19) |
| D | SW30XLE (treated) | 1.85 | (0.075) | 0.32 | (0.19) |
| E | SW30XLE (treated) | 1.99 | (0.082) | 0.20 | (0.12) |

Elements A, B, and C were loaded into a vessel, so that element A was in the lead the position and element C was in the tail position. Permeate flow was blocked between elements B and C to allow the permeate solution from element C to be collected separately. The vessel was tested with a 3.2% NaCl feed at 21°C, an applied pressure of 55 bar (798 psi). The combined recovery was 25.8%. The flux of elements A and B averaged 29 L/m$^2$/hr (17 gfd). The flux of the tail element C was 36.2 L/m$^2$/hr (21.3 gfd). The concentration of NaCl in the combined permeate was 428 ppm.

Element C in Table 3 had a permeate concentration of 357 ppm under conditions used to measure standard solute permeability. The three-element vessel including that element resulted in relatively even flux distribution and produced potable water. Element E in Table 3 had a standard specific flux similar to that for Element C, but its standard solute permeability corresponds to about 237 ppm in a test with 25°C, 32000 ppm NaCl in the feed, 8% recovery, and a flux of 27 L/m$^2$/hr. This element would allow potable water to be produced with even lower pressures or higher recoveries.

Example 2

Two FILMTEC SW30XLE-380 elements were treated by immersing for 30 minutes in an aqueous solution of 1500 ppm and 2000 ppm, respectively, of NaOCl at pH 10.5. The elements had standard specific flux and standard solute permeability values shown in rows H and I of Table 4. In addition, the standard specific flux and standard solute permeability values of FILMTEC SW30HR-380 and SW30XLE-380 elements not contacted with NaOCl are shown in rows F and G, respectively. The ratio of standard solute permeability to standard specific flux for the tail element (0.064) divided by the ratio of standard solute permeability to standard specific flux for the lead element (0.071)is less than 1. For all elements in Table 4, the standard pressure gradient was approximately 0.2 bar/m, and the feed spacer cross sectional area was approximately 230 cm$^2$.

Table 4. Elements described in Example 2

| Element | NaOCl | Standard Specific Flux | | Standard Solute Permeability | |
|---|---|---|---|---|---|
| | | L/m$^2$/hr/bar | (gfd/psi) | L/m$^2$/hr | (gfd) |
| F | 0 ppm | 0.96 | (0.039) | 0.068 | (0.040) |
| G | 0 ppm | 1.43 | (0.058) | 0.042 | (0.025) |
| H | 1500 ppm | 2.09 | (0.085) | 0.13 | (0.076) |
| I | 2000 ppm | 2.66 | (0.108) | 0.08 | (0.100) |

The flows for elements F, G, H, and I were simulated using FilmTec's simulation program (ROSA, version 5.4). The simulation was run by varying the fouling factor of the SW30-380 elements to 0.64, 1.05, 1.44, and 2.0. A vessel composed of three elements of type F, one element of type G, and three elements of type I was simulated by separately simulating each element and allowing the concentrate from each element to become the feed to the next element. A correction was made after each element to permeate concentrations for the differing solute permeabilities for these elements, as compared to the SW3O-380. In this simulation, 3.5% seawater feed was composed of 19479 ppm Cl, 10460 ppm Na, 1450 ppm Mg, 2760 ppm SO4, 450 ppm Ca, and 400 ppm K.

Using 66.6 bar (967 psi) applied pressure and 196 m$^3$/day (36 gpm) raw water feed flow at 25°C, a 60% recovery was achieved in the simulation. Calculations showed the lead element had the greatest flux, at 33.6 L/m$^2$/hr (19.8 gfd). The maximum recovery per element was 15%. The permeate concentration was calculated as 295 ppm, below that accepted in the art for potable water.

Comparative Example 2

A simulation was performed in which 60% recovery was obtained with seven FILMTEC SW30HR-380 elements in series. The first element had an average flux of 39.6 L/m$^2$/hr (23.3 gfd), a recovery of 17%, and the applied pressure was 74.2 bar (1076 psi).

To perform the simulation, a vessel containing one-meter-long, 20 cm diameter elements was simulated, without the use of ROSA software, by performing calculations of flow in the axial direction, from the feed to the tail of the pressure vessel, in one-inch increments. In each case, the applied pressure, feed concentration, and the flow into the first element were given, and performance (pressure drop, flux, and salt passage) within each increment was calculated. Results were propagated to successive one-inch long sections down the vessel.

Calculations assume a specific flux and solute permeability for the membrane within each element; flux and salt passage for each increment were calculated according to standard formulas (Osada & Nakagawa, Membrane Science and Technology, Chapter 9, "Reverse Osmosis," Marcel Dekker, Inc., New York, 1992). Polarization at the surface was estimated from feed velocity and flux according to equations provided for FilmTec elements in G. Schock & A. Miquel, "Mass transfer and pressure loss in spiral wound modules," Desalination, 65, (1987), 339-352). Values for polarization were chosen to equal the standard specific flux and standard solute permeability values noted above.

Example 3 and Comparative Examples 3 and 4

Simulations were performed using the methods of Comparative Example 2

Tables 5-7 below provide results of three simulations, each having 174 m$^3$/day (46000 gpd) feed flow and 50% recovery of 3.8% seawater. Example 3 and Comparative Examples 3 and 4, all simulated a pressure vessel containing six 35.3 m$^2$ (380 fr$^2$) elements, and the average flux for the vessel was 17 L/m$^2$/hr (10 gfd). The membrane specific fluxes (A values) assumed for elements all correspond to ranges easily available. The membrane solute permeability values (B values) was assumed to be the same (0.068 L/m$^2$/hr) for all elements within the vessel, as this value was believed to have minimal impact on flux over operating ranges being examined. Salt passage for permeate from each element was approximately proportional to the assumed B value. The calculated combined permeate concentrations for Example 3, Comparative Example 3, and Comparative Example 4 were 369 ppm, 315 ppm, and 369 ppm. Required Applied Pressures were 68.8 bar (998 psi), 72.5 bar (1051 psi), and 66.9 bar (971 psi), respectively. Example 3 demonstrates that elements in a vessel may be run with low values for the maximum flux, average flux, and maximum element recovery.

Table 5. Flux distribution for Example 3

| Element | Area (m$^2$) | A value (Lmh/bar) | B value (Lmh) | Avg Flux (Lmh) | Max Flux (Lmh) | Recovery |
|---------|---------|---------|---------|---------|---------|---------|
| 1 | 35.3 | 0.739 | 0.068 | 23.1 | 24.8 | 11.5% |
| 2 | 35.3 | 0.862 | 0.068 | 21.6 | 23.8 | 11.9% |
| 3 | 35.3 | 1.231 | 0.068 | 21.1 | 24.4 | 13.1% |
| 4 | 35.3 | 1.970 | 0.068 | 18.0 | 22.6 | 12.9% |
| 5 | 35.3 | 2.462 | 0.068 | 11.7 | 15.1 | 9.7% |
| 6 | 35.3 | 2.462 | 0.068 | 6.8 | 8.7 | 6.2% |

Table 6. Flux distribution for Comparative Example 3

| Element | Area (m$^2$) | A value (Lmh/bar) | B value (Lmh) | Avg Flux (Lmh) | Max Flux (Lmh) | Recovery |
|---------|---------|---------|---------|---------|---------|---------|
| 1 | 35.3 | 0.985 | 0.068 | 30.7 | 34.0 | 15.3% |
| 2 | 35.3 | 0.985 | 0.068 | 24.1 | 27.2 | 13.8% |

(continued)

| Element | Area (m²) | A value (Lmh/bar) | B value (Lmh) | Avg Flux (Lmh) | Max Flux (Lmh) | Recovery |
|---------|-----------|-------------------|---------------|----------------|----------------|----------|
| 3 | 35.3 | 0.985 | 0.068 | 18.2 | 20.9 | 12.1% |
| 4 | 35.3 | 0.985 | 0.068 | 13.2 | 15.4 | 10.0% |
| 5 | 35.3 | 0.985 | 0.068 | 9.3 | 11.0 | 7.9% |
| 6 | 35.3 | 0.985 | 0.068 | 6.5 | 7.6 | 5.9% |

Table 7. Flux distribution for Comparative Example 4

| Element | Area (m²) | A value (Lmh/bar) | B value (Lmh) | Avg Flux (Lmh) | Max Flux (Lmh) | Recovery |
|---------|-----------|-------------------|---------------|----------------|----------------|----------|
| 1 | 35.3 | 1.724 | 0.068 | 37.7 | 44.3 | 18.8% |
| 2 | 35.3 | 1.724 | 0.068 | 25.6 | 30.9 | 15.4% |
| 3 | 35.3 | 1.724 | 0.068 | 16.8 | 20.7 | 11.9% |
| 4 | 35.3 | 1.724 | 0.068 | 10.7 | 13.2 | 8.6% |
| 5 | 35.3 | 1.724 | 0.068 | 6.8 | 8.5 | 5.9% |
| 6 | 35.3 | 1.724 | 0.068 | 4.2 | 5.3 | 3.9% |

Example 4

Calculations were performed as in Example 3, using a 167 m³/day (44000 gpd) feed of 3.5% seawater. An applied pressure of 79.3 bar (1150 psi) resulted in a simulated recovery of 60.8% for this vessel. In this case, seven elements within the vessel potentially differed in A values, B values and active area, as noted in the table. The combined permeate concentration was estimated at 448 ppm. Simulations show each element within this vessel to have low values for maximum flux, average flux and element recovery. Dividing the total permeate flow by the active membrane area provides an average flux for the vessel of 18.8 L/m2/hr (11.1 gfd).

Table 8. Flux distribution for Example 4

| Element | Area (m²) | A value (Lmh/bar) | B value (Lmh) | Avg Flux (Lmh) | Max Flux (Lmh) | Recovery |
|---------|-----------|-------------------|---------------|----------------|----------------|----------|
| 1 | 35.3 | 0.616 | 0.068 | 26.5 | 28.2 | 13.8% |
| 2 | 33.0 | 0.739 | 0.068 | - 26.1 | 28.7 | 14.4% |
| 3 | 33.0 | 0.862 | 0.068 | 23.3 | 26.3 | 14.9% |
| 4 | 30.7 | 1.231 | 0.170 | 21.2 | 25.5 | 14.9% |
| 5 | 30.7 | 2.462 | 0.170 | 17.3 | 22.7 | 14.3% |
| 6 | 30.7 | 2.462 | 0.170 | 9.5 | 12.6 | 9.2% |
| 7 | 30.7 | 2.462 | 0.170 | 5.3 | 7.0 | 5.6% |

**Claims**

**1.**  An apparatus for purifying water comprising:

a filtration pressure vessel (40) having opposing inlet (46) and outlet (48) ends, ports (42, 44) for passing feed solution and removing concentrate solution, at least one permeate port (62), and enclosing at least three spiral-wound elements (50, 52, 54), each spiral-wound element having at least one membrane envelope (2), a feed spacer sheet (4), and a permeate collection tube (6), where the spiral wound elements are connected in series coaxially within the filtration pressure vessel (40); wherein the spiral-wound elements in series comprise:

a. a lead element (50) with an inlet in communication with the inlet end (46) of the filtration pressure vessel (40);

b. an intermediate element (52) connected to an upstream element and a downstream element so that the intermediate element (52) is supported and aligned axially within the filtration pressure vessel (40); and

c. a tail element (54) with an exit port in communication with the outlet end (48) of the filtration pressure vessel (40);

**characterized in that**:

- the spiral-wound elements have different standard specific fluxes, and comprise a spiral wound element having a maximum value of standard specific flux, a spiral wound element having a minimum value of standard specific flux, and a spiral wound element having an intermediate value of standard specific flux;

- the maximum value of standard specific flux divided by the minimum value of standard specific flux is greater than 2; and the intermediate element has a value of standard specific flux that is an intermediate value between 1.25 of the minimum value and 0.85 of the maximum, and that

- the standard specific flux of the tail element (54) divided by the standard specific flux of the lead element (50) is greater than 2.

2. The apparatus of claim 1, where the lead element, intermediate element and tail element are each of a different type of element.

3. The apparatus of claim 1, wherein the standard specific flux for the tail element (54) is greater than 1.5 L/m$^2$/hr/bar.

4. The apparatus of claim 1, wherein the feed spacer sheet (4) for the tail element (54) has a standard pressure gradient that is 50% greater than the standard pressure gradient for the feed spacer sheet (4) of the lead element (50).

5. A process for purifying water comprising the steps of:

a. flowing a feed solution through a filtration pressure vessel (40) having opposing ends (46, 48) and containing at least three spiral wound elements (50, 52, 54) in series, the elements in series including:

- a lead element (50) with an inlet in communication with the inlet end (46) of the filtration pressure vessel (40);

- an intermediate element (52) connected to an upstream element and a downstream element so that the intermediate element (52) is supported and aligned axially within the filtration pressure vessel (40); and

- a tail element (54) with an exit port in communication with the outlet end (48) of the filtration pressure vessel (40);

b. applying filtration pressure to the feed solution to cause permeate to pass through each element within the filtration pressure vessel (40), and

c. removing permeate and concentrate solutions from the filtration pressure vessel (40), **characterized in that**:

- the spiral-wound elements have different standard specific fluxes, and comprise a spiral wound element having a maximum value of standard specific flux, a spiral wound element having a minimum value of standard specific flux, and a spiral wound element having an intermediate value of standard specific flux;

- the maximum value of standard specific flux divided by the minimum value of standard specific flux is greater than 2; and the intermediate element has a value of standard specific flux that is an intermediate value between 1.25 of the minimum value and 0.85 of the maximum,

- the standard specific flux of the tail element (54) divided by the standard specific flux of the lead element (50) is greater than 2; and

- the feed solution has an osmotic pressure greater than 20 bar at the inlet end (46) of the filtration pressure vessel (40).

6. The process of claim 5, wherein the standard specific flux for the downstream element divided by the standard specific flux for the lead element (50) is greater than 1.5.

7. The process of claim 5, wherein the downstream element has a standard specific flux that is greater than 1.5 L/m$^2$/hr/bar.

8. The process of claim 5, wherein an average net driving pressure for the lead element (50) divided by an average net driving filtration pressure for the downstream element is greater than 2.

9. The process of claim 5, wherein the vessel (40) contains at least five spiral wound elements in series, the volume of the concentrate solution produced is no more than twice the volume of the permeate solution produced, the average flux for the vessel (40) is at least 70% of the average flux for the lead element (50), and the lead element (50) has an average flux of between 10 and 27 L/m$^2$/hr.

10. The process of claim 5, wherein the lead element (50) is operated with an average flux less than 34 L/m$^2$/hr and the vessel is operated with an average flux greater than 24 K/m$^2$/hr.

11. The process of claim 5, wherein the concentrate solution has an osmotic pressure that is more than twice the osmotic pressure at the inlet.

12. The process of claim 5, wherein the downstream element has a feed spacer cross sectional area that is at least 15% less than the feed spacer cross sectional area of the lead element.

13. The process of claim 5, wherein the downstream element has a NaCl passage greater than 20% when the element is tested individually using a flux of 27 L/m$^2$/hr, 8% recovery, and a 25°C feed solution consisting of 32000 ppm NaCl in water, and wherein the downstream element has a sulfate passage less than 1% when tested individually using a flux of 27 L/m$^2$/hr, 8% recovery, and a 25°C feed solution consisting of 32000 ppm NaCl and 2000 ppm MgSO$_4$ in water.

14. The process of claim 5, wherein the feed spacer sheet (4) for the tail element (54) has a standard pressure gradient that is 50% greater than the standard pressure gradient for the feed spacer sheet (4) of the lead element (50).

15. The process of claim 5, wherein the filtration pressure vessel (40) is one of two or more parallel filtration pressure vessels in a filtration system.

16. The process of claim 5, wherein the lead element, intermediate element and tail element are each of a different type of element.

17. The process of claim 5, wherein the filtration pressure vessel (40) further comprises a barrier (66) positioned either within the permeate collection tube (6) of a spiral wound element or between the permeate collection tubes (6) of two adjacent elements; where the barrier (66) defines first and second combined permeate streams; where the first combined permeate stream comprises the permeate from the lead element (50) and the second combined permeate stream comprises the permeate from a downstream element (54); where the barrier (66) further preventing mixing of permeate between the combined permeate streams; and wherein the first combined permeate stream has a pressure greater than a pressure of the second combined permeate stream of at least 1.5 bar; where the first combined permeate stream comprises the entire of permeate from the element having the maximum value of standard specific flux, where the first combined permeate stream is a feed stream to a second filtration vessel.

18. The process of claim 5, wherein the step of removing permeate from the filtration pressure vessel (40) comprises removing a permeate stream from both ends (46, 48) of the filtration pressure vessel (40).

19. The process of claim 16, wherein the permeate stream from the inlet end (46) of the filtration pressure vessel (40) is of higher quality than the permeate stream from the downstream end (48), and wherein the permeate stream from the downstream end (48) of the filtration pressure vessel (40) is subjected to additional treatment steps.

**Patentansprüche**

1. Vorrichtung zum Reinigen von Wasser, umfassend:

   ein Filtrationsdruckgefäß (40) mit einander entgegengesetzten Einlass- (46) und Auslassenden (48), Stutzen (42, 44) zum Einleiten von Feed-Lösung und Entnehmen von Konzentratlösung, mindestens einen Permeatstutzen (62), und um mindestens drei spiralförmig gewickelte Elemente (50, 52, 54) herum, wobei jedes spiralförmig gewickelte Element mindestens eine membranartige Hülle (2) aufweist, eine Feed-Abstandshalterfolie (4) und ein Permeatsammelrohr (6), wobei die spiralförmig gewickelten Elemente in dem Filtrationsdruckgefäß (40) koaxial hintereinander angeordnet sind; wobei die hintereinander angeordneten spiralförmig gewickelten Elemente Folgendes umfassen:

a. ein vorderes Element (50) mit einem Einlass, der mit dem Einlassende (46) des Filtrationsdruckgefäßes (40) in Verbindung steht;
b. ein mittleres Element (52), das mit einem stromaufwärtigen Element und einem stromabwärtigen Element verbunden ist, so dass das mittlere Element (52) in dem Filtrationsdruckgefäß (40) gehalten und axial ausgerichtet wird; und
c. ein hinteres Element (54) mit einem Austrittsstutzen, der mit dem Auslassende (48) des Filtrationsdruckgefäßes (40) in Verbindung steht;

**dadurch gekennzeichnet, dass**

- die spiralförmig gewickelten Elemente unterschiedliche spezifische Standardflussraten haben und ein spiralförmig gewickeltes Element mit einem Maximalwert für die spezifische Standardflussrate, ein spiralförmig gewickeltes Element mit einem Minimalwert für die spezifische Standardflussrate und ein spiralförmig gewickeltes Element mit einem mittleren Wert für die spezifische Standardflussrate umfassen;
- der Maximalwert der spezifischen Standardflussrate dividiert durch den Minimalwert der spezifischen Standardflussrate größer ist als 2; und das mittlere Element einen Wert für die spezifische Standardflussrate hat, der ein Mittelwert zwischen 1,25 des Minimalwerts und 0,85 des Maximalwerts ist; und dass
- die spezifische Standardflussrate des hinteren Elements (54) dividiert durch die spezifische Standardflussrate des vorderen Elements (50) größer ist als 2.

2. Vorrichtung nach Anspruch 1, wo das vordere Element, das mittlere Element und das hintere Element jeweils eine andere Art von Element sind.

3. Vorrichtung nach Anspruch 1, wobei die spezifische Standardflussrate für das hintere Element (54) größer ist als 1,5 L/m$^2$/h/bar.

4. Vorrichtung nach Anspruch 1, wobei die Feed-Abstandshalterfolie (4) für das hintere Element (54) einen Standarddruckgradienten hat, der 50% größer ist als der Standarddruckgradient für die Feed-Abstandshalterfolie (4) des vorderen Elements (50).

5. Verfahren zum Reinigen von Wasser, mit den folgenden Schritten:

a. Hindurchleiten einer Feed-Lösung durch ein Filtrationsdruckgefäß (40) mit einander entgegengesetzten Enden (46, 48) und mit mindestens drei hintereinander angeordneten spiralförmig gewickelten Elementen (50, 52, 54), wobei die hintereinander angeordneten Elemente Folgendes umfassen:

- ein vorderes Element (50) mit einem Einlass, der mit dem Einlassende (46) des Filtrationsdruckgefäßes (40) in Verbindung steht;
- ein mittleres Element (52), das mit einem stromaufwärtigen Element und einem stromabwärtigen Element verbunden ist, so dass das mittlere Element (52) in dem Filtrationsdruckgefäß (40) gehalten und axial ausgerichtet wird; und
- ein hinteres Element (54) mit einem Austrittsstutzen, der mit dem Auslassende (48) des Filtrationsdruckgefäßes (40) in Verbindung steht;

b. die Feed-Lösung mit Filtrationsdruck beaufschlagen, damit Permeat durch jedes Element in dem Filtrationsdruckgefäß (40) geleitet wird; und
c. Entfernen der Permeat- und Konzentratlösungen aus dem Filtrationsdruckgefäß (40),

**dadurch gekennzeichnet, dass**:

- die spiralförmig gewickelten Elemente unterschiedliche spezifische Standardflussraten haben und ein spiralförmig gewickeltes Element mit einem Maximalwert für die spezifische Standardflussrate, ein spiralförmig gewickeltes Element mit einem Minimalwert für die spezifische Standardflussrate und ein spiralförmig gewickeltes Element mit einem mittleren Wert für die spezifische Standardflussrate umfassen;
- der Maximalwert der spezifischen Standardflussrate dividiert durch den Minimalwert der spezifischen Standardflussrate größer ist als 2; und das mittlere Element einen Wert für die spezifische Standardflussrate hat, der ein Mittelwert zwischen 1,25 des Minimalwerts und 0,85 des Maximalwerts ist;
- die spezifische Standardflussrate des hinteren Elements (54) dividiert durch die spezifische Standardflussrate des vorderen Elements (50) größer ist als 2; und
- die Feed-Lösung am Einlassende (46) des Filtrationsdruckgefäßes (40) einen osmotischen Druck größer als 20 bar hat.

6. Verfahren nach Anspruch 5, wobei die spezifische Standardflussrate für das stromabwärtige Element dividiert durch die spezifische Standardflussrate für das vordere Element (50) größer ist als 1,5.

7. Verfahren nach Anspruch 5, wobei das stromabwärtige Element eine spezifische Standardflussrate hat, die größer ist als 1,5 L/m$^2$/h/bar.

8. Verfahren nach Anspruch 5, wobei ein durchschnittlicher Netto-Antriebsdruck für das vordere Element (50) dividiert durch einen durchschnittlichen Netto-Filtrationsantriebsdruck für das stromabwärtige Element größer ist als 2.

9. Verfahren nach Anspruch 5, wobei das Gefäß (40) mindestens fünf hintereinander angeordnete spiralförmig gewickelte Elemente enthält, das Volumen der hergestellten Konzentratlösung nicht mehr als das Doppelte des Volumens der hergestellten Permeatlösung beträgt, die durchschnittliche Flussrate für das Gefäß (40) mindestens 70% der durchschnittlichen Flussrate für das vordere Element (50) beträgt, und das vordere Element (50) eine durchschnittliche Flussrate zwischen 10 und 27 L/m$^2$/h aufweist.

10. Verfahren nach Anspruch 5, wobei das vordere Element (50) mit einer durchschnittlichen Flussrate kleiner als 34 L/m$^2$/h betrieben wird und das Gefäß mit einer durchschnittlichen Flussrate größer als 24 L/m$^2$/h betrieben wird.

11. Verfahren nach Anspruch 5, wobei die Konzentratlösung einen osmotischen Druck besitzt, der mehr als das Doppelte des osmotischen Druckes am Einlass beträgt.

12. Verfahren nach Anspruch 5, wobei das stromabwärtige Element eine Feed-Abstandshalter-Querschnittsfläche besitzt, die mindestens 15% kleiner ist als die Feed-Abstandshalter-Querschnittsfläche des vorderen Elements.

13. Verfahren nach Anspruch 5, wobei das stromabwärtige Element einen NaCl-Durchtritt größer als 20% besitzt, wenn das Element mit einer Flussrate von 27 L/m$^2$/h, 8% Rückstellung und einer 25°C warmen Feed-Lösung aus 32000 ppm NaCl in Wasser einzeln getestet wird, und wobei das stromabwärtige Element einen Sulfatdurchtritt kleiner als 1% besitzt, wenn es mit einer Flussrate von 27 L/m$^2$/h, 8% Rückstellung und einer 25°C warmen Feed-Lösung aus 32000 ppm NaCl und 2000 ppm MgSO$_4$ in Wasser einzeln getestet wird.

14. Verfahren nach Anspruch 5, wobei die Feed-Abstandshalterfolie (4) für das hintere Element (54) einen Standarddruckgradienten besitzt, der 50% größer ist als der Standarddruckgradient für die Feed-Abstandshalterfolie (4) des vorderen Elements (50).

15. Verfahren nach Anspruch 5, wobei das Filtrationsdruckgefäß (40) eines von zwei oder mehr parallelen Filtrationsdruckgefäßen in einem Filtrationssystem ist.

16. Verfahren nach Anspruch 5, wobei das vordere Element, das mittlere Element und das hintere Element jeweils eine andere Art von Element sind.

17. Verfahren nach Anspruch 5, wobei das Filtrationsdruckgefäß (40) ferner eine Sperre (66) umfasst, die entweder in dem Permeatsammelrohr (6) eines spiralförmig gewickelten Elements oder zwischen den Permeatsammelrohren (6) von zwei benachbarten Elementen positioniert ist; wobei die Sperre (66) erste und zweite kombinierte Permeatströme definiert; wobei der erste kombinierte Permeatstrom das Permeat aus dem vorderen Element (50) umfasst und der zweite kombinierte Permeatstrom das Permeat aus einem stromabwärtigen Element (54) umfasst; wobei die Sperre (66) ferner eine Vermischung von Permeat zwischen den kombinierten Permeatströmen verhindert; und wobei der erste kombinierte Permeatstrom einen Druck besitzt, der größer ist als ein Druck des zweiten kombinierten Permeatstroms von mindestens 1,5 bar; wobei der erste kombinierte Permeatstrom das gesamte Permeat aus dem Element mit dem Maximalwert der spezifischen Standardflussrate umfasst, wobei der erste kombinierte Permeatstrom ein Zustrom zu einem zweiten Filtrationsgefäß ist.

**18.** Verfahren nach Anspruch 5, wobei der Schritt des Entfernens von Permeat aus dem Filtrationsdruckgefäß (40) das Entfernen eines Permeatstroms aus beiden Enden (46, 48) des Filtrationsdruckgefäßes (40) umfasst.

**19.** Verfahren nach Anspruch 16, wobei der Permeatstrom aus dem Einlassende (46) des Filtrationsdruckgefäßes (40) von höherer Qualität ist als der Permeatstrom aus dem stromabwärtigen Ende (48), und wobei der Permeatstrom aus dem stromabwärtigen Ende (48) des Filtrationsdruckgefäßes (40) weiteren Behandlungsschritten unterzogen wird.

**Revendications**

**1.** Un appareil destiné à purifier de l'eau, comprenant :

un récipient sous pression de filtration (40) présentant des extrémités d'admission (46) et d'évacuation (48) opposées, des orifices (42, 44) pour faire passer une solution d'alimentation et retirer une solution de concentré, au moins un orifice de perméat (62) et renfermant au moins trois éléments enroulés en spirale (50, 52, 54), chaque élément enroulé en spirale présentant au moins une enveloppe en membranes (2), un feuillet espaceur d'alimentation (4), et un tube de collecte de perméat (6), où les éléments enroulés en spirale sont raccordés en série de manière coaxiale à l'intérieur du récipient sous pression de filtration (40) ; dans lequel les éléments enroulés en spirale en série comprennent :

a. un élément de tête (50) avec une admission en communication avec l'extrémité d'admission (46) du récipient sous pression de filtration (40) ;
b. un élément intermédiaire (52) raccordé à un élément amont et un élément aval de sorte que l'élément intermédiaire (52) soit supporté et aligné de manière axiale à l'intérieur du récipient sous pression de filtration (40) ; et
c. un élément de queue (54) avec un orifice de sortie en communication avec l'extrémité d'évacuation (48) du récipient sous pression de filtration (40) ;

**caractérisé en ce que** :

- les éléments enroulés en spirale présentent différents flux spécifiques standard, et comprennent un élément enroulé en spirale présentant une valeur maximum de flux spécifique standard, un élément enroulé en spirale présentant une valeur minimum de flux spécifique standard, et un élément enroulé en spirale présentant une valeur intermédiaire de flux spécifique standard ;
- le produit de la division de la valeur maximum de flux spécifique standard par la valeur minimum de flux spécifique standard est supérieur à 2 ; et l'élément intermédiaire présente une valeur de flux spécifique standard qui est une valeur intermédiaire entre 1,25 de la valeur minimum et 0,85 de la maximum, et **en ce que**
- le produit de la division du flux spécifique standard de l'élément de queue (54) par le flux spécifique standard de l'élément de tête (50) est supérieur à 2.

**2.** L'appareil de la revendication 1, où l'élément de tête, l'élément intermédiaire et l'élément de queue sont chacun d'un type d'élément différent.

**3.** L'appareil de la revendication 1, dans lequel le flux spécifique standard pour l'élément de queue (54) est supérieur à 1,5 L/m$^2$/h/bar.

**4.** L'appareil de la revendication 1, dans lequel le feuillet espaceur d'alimentation (4) pour l'élément de queue (54) présente un gradient de pression standard qui est supérieur de 50 % au gradient de pression standard pour le feuillet espaceur d'alimentation (4) de l'élément de tête (50).

**5.** Un procédé destiné à purifier de l'eau comprenant les étapes consistant :

a. à faire s'écouler une solution d'alimentation à travers un récipient sous pression de filtration (40) présentant des extrémités opposées (46, 48) et contenant au moins trois éléments enroulés en spirale (50, 52, 54) en série, les éléments en série incluant :

- un élément de tête (50) avec une admission en communication avec l'extrémité d'admission (46) du récipient sous pression de filtration (40) ;
- un élément intermédiaire (52) raccordé à un élément amont et un élément aval de sorte que l'élément intermédiaire (52) soit supporté et aligné de manière axiale à l'intérieur du récipient sous pression de filtration (40) ; et
- un élément de queue (54) avec un orifice de sortie en communication avec l'extrémité d'évacuation (48) du récipient sous pression de filtration (40) ;

b. à appliquer une pression de filtration sur la solution d'alimentation afin d'amener du perméat à passer à travers chaque élément à l'intérieur du récipient sous pression de filtration (40), et

c. à retirer des solutions de perméat et de concentré du récipient sous pression de filtration (40), **caractérisé en ce que** :

- les éléments enroulés en spirale présentent différents flux spécifiques standard, et comprennent un élément enroulé en spirale présentant une valeur maximum de flux spécifique standard, un élément enroulé en spirale présentant une valeur minimum de flux spécifique standard, et un élément enroulé en spirale présentant une valeur intermédiaire de flux spécifique standard ;
- le produit de la division de la valeur maximum de flux spécifique standard par la valeur minimum de flux spécifique standard est supérieur à 2 ; et l'élément intermédiaire présente une valeur de flux spécifique standard qui est une valeur intermédiaire entre 1,25 de la valeur minimum et 0,85 de la maximum,
- le produit de la division du flux spécifique standard de l'élément de queue (54) par le flux spécifique standard de l'élément de tête (50) est supérieur à 2 ; et
- la solution d'alimentation présente une pression osmotique supérieure à 20 bar au niveau de l'extrémité d'admission (46) du récipient sous pression de filtration (40).

6. Le procédé de la revendication 5, dans lequel le produit de la division du flux spécifique standard pour l'élément aval par le flux spécifique standard pour l'élément de tête (50) est supérieur à 1,5.

7. Le procédé de la revendication 5, dans lequel l'élément aval présente un flux spécifique standard qui est supérieur à 1,5 L/m$^2$/h/bar.

8. Le procédé de la revendication 5, dans lequel le produit de la division d'une pression motrice nette moyenne pour l'élément de tête (50) par une pression de filtration motrice nette moyenne pour l'élément aval est supérieur à 2.

9. Le procédé de la revendication 5, dans lequel le récipient (40) contient au moins cinq éléments enroulés en spirale en série, le volume de la solution de concentré produite ne fait pas plus de deux fois le volume de la solution de perméat produite, le flux moyen pour le récipient (40) fait au moins 70 % du flux moyen pour l'élément de tête (50), et l'élément de tête (50) présente un flux moyen compris entre 10 et 27 L/m$^2$/h.

10. Le procédé de la revendication 5, dans lequel l'élément de tête (50) fonctionne avec un flux moyen inférieur à 34 L/m$^2$/h et le récipient fonctionne avec un flux moyen supérieur à 24 L/m$^2$/h.

11. Le procédé de la revendication 5, dans lequel la solution de concentré présente une pression osmotique qui fait plus de deux fois la pression osmotique au niveau de l'admission.

12. Le procédé de la revendication 5, dans lequel l'élément aval présente une superficie en coupe transversale de l'espaceur d'alimentation qui est inférieure de 15 % au moins à la superficie en coupe transversale de l'espaceur d'alimentation de l'élément de tête.

13. Le procédé de la revendication 5, dans lequel l'élément aval présente un passage de NaCl supérieur à 20 % lorsque l'élément est testé individuellement en utilisant un flux de 27 L/m$^2$/h, une récupération de 8 % et une solution d'alimentation à 25 °C consistant en 32 000 ppm de NaCl dans de l'eau, et dans lequel l'élément aval présente un passage de sulfate inférieur à 1 % lorsqu'il est testé individuellement en utilisant un flux de 27 L/m$^2$/h, une récupération de 8 %, et une solution d'alimentation à 25 °C consistant en 32 000 ppm de NaCl et 2 000 ppm de MgSO$_4$ dans de l'eau.

14. Le procédé de la revendication 5, dans lequel le feuillet espaceur d'alimentation (4) pour l'élément de queue (54) présente un gradient de pression standard qui est supérieur de 50 % au gradient de pression standard pour le feuillet espaceur d'alimentation (4) de l'élément de tête (50).

**15.** Le procédé de la revendication 5, dans lequel le récipient sous pression de filtration (40) est un récipient d'entre deux récipients sous pression de filtration parallèles ou plus dans un système de filtration.

**16.** Le procédé de la revendication 5, dans lequel l'élément de tête, l'élément intermédiaire et l'élément de queue sont chacun d'un type d'élément différent.

**17.** Le procédé de la revendication 5, dans lequel le récipient sous pression de filtration (40) comprend en outre une barrière (66) positionnée soit à l'intérieur du tube de collecte de perméat (6) d'un élément enroulé en spirale, soit entre les tubes de collecte de perméat (6) de deux éléments adjacents ; où la barrière (66) définit des premier et deuxième courants de perméat combinés ; où le premier courant de perméat combiné comprend le perméat provenant de l'élément de tête (50) et le deuxième courant de perméat combiné comprend le perméat provenant d'un élément aval (54) ; la barrière (66) empêchant en outre un mélange de perméat entre les courants de perméat combinés ; et dans lequel le premier courant de perméat combiné présente une pression supérieure à une pression du deuxième courant de perméat combiné d'au moins 1,5 bar ; où le premier courant de perméat combiné comprend l'intégralité du perméat provenant de l'élément présentant la valeur maximum de flux spécifique standard, le premier courant de perméat combiné étant un courant d'alimentation vers un deuxième récipient de filtration.

**18.** Le procédé de la revendication 5, dans lequel l'étape consistant à retirer du perméat du récipient sous pression de filtration (40) comprend le fait de retirer un courant de perméat des deux extrémités (46, 48) du récipient sous pression de filtration (40).

**19.** Le procédé de la revendication 16, dans lequel le courant de perméat provenant de l'extrémité d'admission (46) du récipient sous pression de filtration (40) est de plus grande qualité que le courant de perméat provenant de l'extrémité aval (48), et dans lequel le courant de perméat provenant de l'extrémité aval (48) du récipient sous pression de filtration (40) est soumis à des étapes de traitement additionnelles.

Relative Position in 6 Element Vessel

46 56 40 6 48

42 6 66 58 6 44

62 50 58 52 56 54 64

Fig. 4

EP 1 720 639 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6508936 B
- US 4723603 A
- US 5538642 A
- US 5681467 A
- US 6074595 A
- US 6165303 A
- US 6632356 B
- US 6187200 B
- US 6277282 B
- US 20030205520 A
- US 4046685 A

### Non-patent literature cited in the description

- **M. WILF ; K. KLINKO.** Improving performance and economics of RO seawater desalting using capillary membrane pretreatment. Hydranautics, Inc, June 1998
- Reverse Osmosis. **OSADA ; NAKAGAWA.** Membrane Science and Technology. Marcel Dekker, Inc, 1992
- **G. SCHOCK ; A. MIQUEL.** Mass transfer and pressure loss in spiral wound modules. *Desalination,* 1987, vol. 65, 339-352